Europäisches Patentamt

European Patent Office

Office européen des brevets

(19)

(11) Numéro de publication: **0 402 201**
**A2**

## (12) DEMANDE DE BREVET EUROPEEN

(21) Numéro de dépôt: **90401445.3**

(22) Date de dépôt: **30.05.90**

(51) Int. Cl.5: **B29C 53/78, F16L 47/02,**
**B29C 65/34, B29D 23/00,**
**//B29L31:24**

(30) Priorité: **09.06.89 FR 8907648**

(43) Date de publication de la demande:
**12.12.90 Bulletin 90/50**

(84) Etats contractants désignés:
**AT BE CH DE DK ES FR GB GR IT LI LU NL SE**

(71) Demandeur: **BOULET-D'AURIA, TERLIZZI & CIE**
**3, Rue de l'Industrie**
**Monaco(MC)**

Demandeur: **GAZ DE FRANCE**
**23, rue Philibert Delorme**
**F-75017 Paris(FR)**

(72) Inventeur: **Boulet D'Auria, Vincent Stanislas**
**32, Avenue du 3 Septembre**
**F-06320 Cap D'Ail(FR)**

(74) Mandataire: **Rodhain, Claude et al**
**Cabinet Claude Rodhain 30, rue la Boétie**
**F-75008 Paris(FR)**

(54) **Fil gainé profilé destiné notamment à former un insert d'électro-soudure.**

(57) L'invention concerne un élément filiforme constitué d'au moins un fil résistant enrobé d'une matière thermoplastique.

Il est remarquable par le fait que l'enrobage (2) présente des parties de fixation mécanique (3a, 3b), dont l'une est destinée à coopérer avec l'autre partie de fixation d'un élément filiforme identique adjacent à assembler.

Cet élément filiforme est particulièrement destiné à la réalisation d'inserts d'électro-soudure. Dans le cas d'inserts d'électro-soudure destiné à un manchon de soudage pour l'assemblage de pièces tubulaires en matière thermoplastique, il est de préférence assemblé selon un enroulement hélicoïdal.

Dans le cas d'inserts d'électro-soudure destiné à un raccord de dérivation avec perforation d'une pièce tubulaire en matière plastique, il peut être assemblé selon une spirale.

FIG.1

La présente invention se rapporte à un fil résistant gainé profilé, pouvant donc être relié, selon diverses formes, à un fil analogue adjacent. Ce fil est en particulier destiné à former un insert chauffant pour raccord électro-soudable, notamment de canalisation en matière plastique, telles que les canalisations de distribution de gaz réalisées en général en polyéthylène haute densité.

La technique d'électro-soudage consiste à chauffer les surfaces de contact des pièces, grâce à un fil chauffant noyé dans la pièce de raccordement et formant une résistance électrique, afin d'atteindre la température de soudage des matériaux.

La technique la plus couramment utilisée pour former de tels raccords, est le surmoulage par injection. Le fil chauffant est mis en place dans une bobine, laquelle est surmoulée pour former la pièce de raccordement. Ainsi le fil est relativement proche de la surface intérieure de l'élément. Pour réaliser une bonne qualité de soudage il est en effet souhaitable que le fil soit le plus près possible de cette surface intérieure de contact.

La fabrication de ce manchon ensuite surmoulé est donc un processus important de la réalisation de raccords électro-soudables.

En général, le fil est enroulé sur le manchon relativement fin, soit directement et fixé, par exemple, par chauffage du fil (brevet européen 0303 909 GLYMWED TUBES AND FITTINGS LIMITED), soit introduit dans une rainure hélicoïdale préformée sur le manchon (brevet européen 0262 735 WAVIN).

Il a été également proposé de former des inserts préfabriqués, à partir d'un fil gainé.

C'est le cas du raccord d'électro-soudure du brevet européen 0036 963 (GEORG FISHER AKTIEN GESELLSCHAFT), selon lequel un fil enrobé cylindrique est enroulé en hélice, l'enrobage de chaque fil est solidement assemblé à l'enrobage de la spire suivante, par soudage lors de la fabrication de l'enroulement, pour former une douille compacte.

C'est également un insert de ce type qui est décrit dans le brevet français 2 503 020 (SERAP), selon lequel un fil gainé est bobiné à spires jointives sur un mandrin extensible, le fil est chauffé suffisamment pour que la gaine ramollisse et le mandrin est mis en extension par un noyau conique pour que la surface extérieure du mandrin soit pratiquement en contact avec une génératrice du fil résistant. Ainsi les spires sont soudées ensemble et on obtient un manchon destiné a être inséré dans un raccord électro-soudable.

Selon une autre technique divulguée dans le brevet français 2 040 143 (GEBERT et Cie), le conducteur de chauffage est constitué par un ruban de matière plastique sur lequel le fil de chauffage est disposé en spires écartées les unes des autres. Ce conducteur de chauffage est ensuite introduit entre les tubes à assembler.

Des inserts de chauffage sont également utilisés dans les pièces de raccordement, utilisées pour réaliser une dérivation grâce à une perforation in-situ d'une canalisation.

De telles pièces de raccordement sont en général en deux parties recevant la canalisation. La perforation est réalisée après soudure par chauffage de la canalisation à l'emplacement de la zone à perforer, ce chauffage étant obtenu au moyen d'une résistance électrique de chauffage.

De la même façon que dans le cas du manchon de raccordement, il a été cherché à réaliser un insert de chauffage préfabriqué.

En effet, selon l'art antérieur décrit par exemple dans le brevet français 2 171 223 (ROLLMAPLAST AG), un fil résistif gainé en forme de spirale ou autre, est pris dans la masse de la partie de selle par surmoulage.

Un insert préfabriqué est décrit, par contre dans le brevet français 2 519 578 (INNOVATION TECHNIQUE SAM) ; cet insert est formé d'une plaquette d'épaisseur relativement faible moulée et comprenant une gorge dans laquelle est mise en place le fil chauffant en forme de spirale ; cet insert est destiné à être incorporé à la face intérieure de la selle, de préférence pendant le moulage de celle-ci.

La préfabrication de ces inserts de chauffage permet la fabrication en grande série, garantit une bonne qualité des pièces de raccordement, tout en facilitant de façon importante les processus du moulage ou de surmoulage.

En résumé, cette préfabrication est obtenue principalement par liaison au préalable, avant la fabrication de la pièce de raccordement elle-même, du fil de chauffage à une base de matière plastique de forme adaptée ou par soudure directe de la gaine du fil avec celle du fil adjacent par chauffage sur une surface de support adéquate.

Or, ces techniques entraînent l'élaboration de pièces d'inserts spécifiques à chaque utilisation, à savoir dans le cas de raccords cylindriques classiques, de manchons et dans le cas de raccords à perforation, de disques ou plaquettes et également à chaque diamètre des éléments tubulaires à raccorder.

L'objet de l'invention est d'allier l'avantage de la préfabrication et celui d'un fil multifonctions pouvant être utilisé pour plusieurs applications.

Pour ce faire, la présente invention consiste en un fil gainé dont la gaine présente des parties de fixation mécanique, pour permettre la liaison aisée, par exemple par conjugaison de forme, d'un élément de fil avec un autre élément de fil, afin de constituer un insert de forme adapté à l'utilisation que l'on lui destine.

Ce fil gainé peut donc être fabriqué en grande longueur, tel un fil gainé cylindrique classique et peut être fixé selon une forme et des dimensions quelconques.

Son agencement par fixation est particulièrement simple, et donc le coût de production d'inserts de ce type est relativement bas, ne nécessitant pas d'appareillage spécifique et complexe de moulage, de chauffage ou de pose.

Conformément à l'invention, l'élément filiforme est donc constitué d'au moins un fil résistant enrobé d'une matière thermoplastique et il est remarquable en ce que l'enrobage présente des parties de fixation mécanique, dont l'une est destinée à coopérer avec l'autre partie de fixation d'un élément filiforme identique adjacent à assembler.

De préférence les parties de fixation mécanique sont constituées de parties profilées, de forme conjuguée, situées sur des faces opposées de l'élément filiforme, et se fixant l'une à l'autre par emboîtement. Ce mode de fixation est en effet particulièrement simple à mettre en oeuvre et la fabrication de l'élément filiforme peut se faire par extrusion sans nécessité d'appareillage complexe.

Selon un mode de réalisation, ces parties de forme conjuguée peuvent être des parties profilées, mâle sur l'une des faces de l'élément et femelle sur l'autre face, par exemple en queue d'aronde.

Selon un autre mode de réalisation, ces parties de fixation comportent chacune une partie mâle et une partie femelle, s'emboitant mutuellement par poussée verticale ; dans ce dernier cas elles peuvent avoir une forme de rainure de section trapézoïdale et ces rainures peuvent être pourvues sur au moins une de leur face intérieure de crans de blocage.

Ces deux modes de réalisation ne sont donnés qu'à titre d'exemple, puisque bien sûr, on peut réaliser ces parties profilées selon d'autres formes permettant l'emboîtement et l'encliquetage. Ces diverses formes permettent l'adaptation facile aux formes d'inserts à réaliser. En effet selon la forme de l'insert, il peut être plus avantageux d'avoir à réaliser l'emboîtement par simple poussée latérale, par poussée verticale ou par combinaison de ces deux déplacements.

Afin de permettre la réalisation d'inserts nécessitant la courbure de l'élément filiforme, par exemple en spirale pour la réalisation d'un disque circulaire, l'élément filiforme peut être pourvu de fentes latérales. Des fentes plus importantes en biseau peuvent également être envisagées, pour la réalisation de pliage angulaire.

L'élément filiforme a donc une section de forme générale rectangulaire et le fil résistant est le plus proche possible d'une de ses faces, de préférence il affleure même sur une de ses faces. En effet comme on l'a vu plus haut un fil chauffant affleurant permet la réalisation d'une soudure des surfaces en contact de meilleure qualité.

De façon avantageuse, l'élément filiforme peut également comporter au moins un second fil chauffant disposé tangent à l'une des surfaces de contact de deux tronçons d'élément filiforme reliés. Ainsi, également par électro-soudage, on améliore la rigidification de l'élément réalisé à l'aide d'au moins un fil filiforme tel que décrit.

Cet élément filiforme est destiné en particulier à réaliser des inserts d'électro-soudage.

Dans le cas d'inserts destinés à des manchons pour l'assemblage de deux pièces tubulaires en matière thermoplastique, il sera de préférence assemblé en un enroulement hélicoïdal.

Dans le cas d'inserts destinés à des raccords de dérivation avec perforation d'une pièce tubulaire en matière thermoplastique, il sera de préférence assemblé en une spirale, afin de former un disque circulaire.

Une autre utilisation de l'élément filiforme selon la présente invention consiste à traiter par électro-soudage des canalisations, de préférence en assemblant par enroulement ledit élément filiforme sur la ou les canalisation(s) et en appliquant une tension au(x) fil(s) chauffant(s) pour réaliser la réparation ou le raccordement des canalisations. Cette application a pour principal avantage de permettre un traitement de canalisations simple, rapide et fiable, à l'aide d'un produit unique et d'appareils électriques courants.

L'invention est exposée ci-après plus en détail à l'aide de dessins représentant seulement un mode d'exécution.

- la figure 1 et la figure 2 représentent, en perspective, deux exemples de réalisation d'éléments filiformes conforme à l'invention.

- la figure 3 représente en section un mode de réalisation préféré de l'élément filiforme.

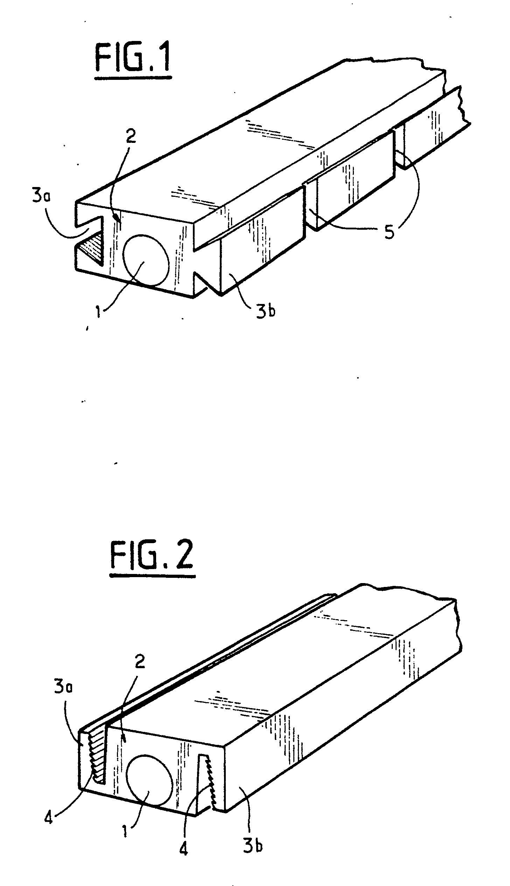

Les figures 1 et 2 représentent deux éléments filiformes, de section générale rectangulaire, formés d'un fil résistant 1 enrobé d'une gaine 2 de matière plastique, en particulier du polyéthylène. Comme on peut le voir sur leur section le fil résistant 1 a une génératrice qui affleure l'une des faces de la section que l'on appelera face inférieure.

Les faces latérales de l'élément filiforme sont pourvues de parties de fixation mécanique 3a, 3b. Selon les exemples représentés, ces parties de fixation mécanique sont constituées de parties profilées destinées à coopérer par conjugaison de forme, par emboîtement ou encliquètement, avec les parties correspondantes d'un tronçon d'élément filiforme adjacent.

Selon la figure 1, ces parties profilées sont constituées d'une partie femelle 3a et d'une partie mâle 3b, de forme conjuguée ; selon l'exemple représenté elles sont en forme de queue d'aronde, mais elles peuvent être également de forme semi-cylindrique ou de toute autre forme permettant un encliquetage aisé.

Sur au moins une des faces latérales de l'élément filiforme, peuvent être prévues des fentes 5 destinées à faciliter la courbure ou le pliage de l'élément.

Selon la figure 2 les parties profilées sont constituées identiques mais symétriques par rapport à l'axe longitudinal de l'élément filiforme, ces parties profilées 3a, 3b formant des espèces de crochet destinés à s'emboîter l'un dans l'autre. Selon l'exemple représenté ces parties de crochet sont formées par des rainures de section trapézoïdale qui présentent sur leur surface intérieure inclinée de crans 4 destinés à les bloquer en position emboîtée. La forme et la section de ces rainures peuvent évidemment être d'une autre forme, par exemple rectangulaire ou triangulaire.

L'élément filiforme tel que décrit précédemment peut comporter au lieu d'un seul fil résistant 1 plusieurs fils en parallèle, l'élément filiforme étant alors élargi en conséquence. Mais ce nombre de fils résistants 1 est limité par la nécessité de pouvoir conformer de façon souhaitée l'élément.

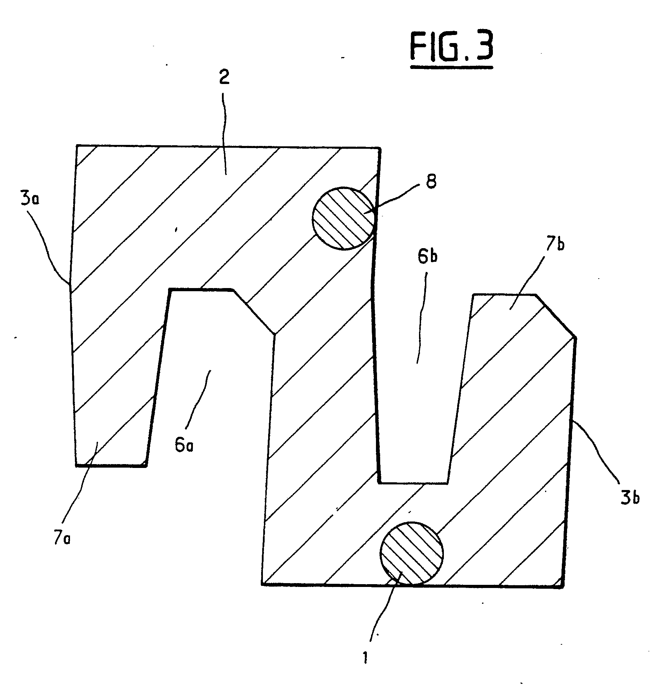

La figure 3 représente en section un agencement préféré de l'élément filiforme.

Selon ce mode de réalisation, au moins un fil chauffant 1 est enrobé dans une gaine 2 en matière plastique comportant deux parties 3a, 3b de forme conjuguée, destinées à s'emboiter par translation verticale.

Chaque partie d'emboitement 3a ou 3b comporte une partie femelle 6a ou 6b et une partie mâle 7a ou 7b.

Les parties femelles 6a, 6b sont constituées chacune d'une rainure ouverte vers le haut ou vers le bas. La partie femelle 6a de la partie d'emboitement 3a a une forme en section analogue à la partie mâle 7b de l'autre partie d'emboitement 3b et la partie mâle 7a de la partie d'emboitement 3a a une forme en section analogue à la partie femelle 6b de la partie d'emboitement 3b. La section de l'élément filiforme a ainsi une forme générale de S tourné de 90°.

Le fil chauffant 1 est placé, tangent à la surface de la gaine destinée à venir en contact avec la surface d'un ou des élément(s) tubulaire(s) à raccorder. De préférence, ce fil chauffant 1 sera placé sous l'une des parties femelles 6a ou 6b.

Eventuellement cet élément filiforme peut comporter au moins un second fil chauffant 8 placé tangent à l'une des surfaces de contact de tronçons d'élément filiforme reliés de préférence tel que représenté sur la figure 3 placé tangent à la surface intérieure de la partie femelle 6a ou 6b, à une certaine distance de la surface opposée à la surface destinée à venir en contact avec les éléments tubulaires à raccorder.

Ce second fil chauffant 8 sert à la rigidification du raccord ou de l'insert réalisé. Il permet en effet la soudure mutuelle des tronçons d'élément filiforme reliés.

L'élément filiforme peut être fabriqué par extrusion de polyéthylène autour du ou des fils résistants.

Il est notamment destiné à la réalisation d'inserts d'électro-soudure, de forme et de dimension variées.

Dans le cas d'un insert d'électro-soudage destinés à un manchon de soudage pour l'assemblage de pièces tubulaires en matière plastique, il pourra être fixé selon un enroulement hélicoïdal.

Dans le cas d'un insert d'électro-soudage destiné à un raccord de dérivation de canalisation par perforation, il pourra être fixé selon une spirale pour former un disque circulaire.

L'élément filiforme se présente donc en grande longueur, et peut être découpé et conformé selon des formes diverses grâce aux fentes 5 ou éventuellement à des découpes réalisées selon les besoins spécifiques.

Une autre application très intéressante de cet élément filiforme d'électro-soudage est le raccordement ou la réparation de canalisations in-situ.

Le réparateur a à sa disposition une longueur de fil gainé profilé, telle que précédemment décrit. Il peut enrouler ce fil gainé autour de la ou des canalisation(s) à traiter éventuellement même en plusieurs couches. Il applique ensuite la tension adéquate pour réaliser l'électro-soudage.

Le fil peut dans ce sens être fourni avec des abaques permettant à l'opérateur d'appliquer la tension adéquate durant la durée convenable.

Un premier type d'abaque permet de déterminer la durée de soudure en fonction de la tension appliquée et du diamètre de la ou des canalisation(s). Dans ce cas, le fil gainé peut être pourvu de repères visuels à des longueurs précises, afin que le fil puisse être coupé rapidement à la longueur souhaitée en fonction du diamètre.

Un second type d'abaque permet de déterminer la durée de soudure en fonction de la tension appliquée et de la résistivité de l'enroulement.

L'élément filiforme selon la précédente invention forme donc un produit prêt à l'emploi, pratique et fiable, pour le traitement de canalisations, dont la mise en oeuvre ne nécessite que des appareils électriques courants (ohmètre, batterie, transformateur,...).

**Revendications**

1) Elément filiforme constitué d'au moins un fil résistant enrobé d'une matière thermoplastique dans lequel l'enrobage (2) présente des parties profilées, de forme conjuguée et situées sur des faces opposées de l'élément filiforme pour constituer des parties de fixation mécanique dont l'une est destinée à se fixer par emboîtement avec l'autre partie profilée de fixation d'un tronçon d'un élément filiforme identique adjacent à assembler, caractérisé en ce qu'il comporte un second fil chauffant (8) enrobé disposé tangent à l'une des surfaces de contact des deux tronçons d'élément filiforme à assembler et qui est destiné à permettre la soudure mutuelle des tronçons d'élément filiforme assemblés.

2) Elément filiforme selon la revendication 1, caractérisé en ce que les parties profilées de fixation (3a, 3b) sont des parties, mâle (3b) et femelle (3a).

3) Elément filiforme selon la revendication 1, caractérisé en ce que les parties profilées de fixation (3a, 3b) comportent chacune une partie mâle (7a, 7b) et une partie femelle (6a, 6b) s'emboîtant mutuellement par poussée verticale.

4) Elément filiforme selon la revendication 3, caractérisé en ce que la partie femelle (6a) ou (6b) de l'une des partie de fixation (3a) ou (3b) a une forme de section analogue à celle de la partie mâle (7b) ou (7a) de l'autre partie de fixation (3b) ou (3a).

5) Elément filiforme selon l'une quelconque des revendications précédentes, caractérisé en ce que le fil résistant (1) présente une génératrice qui affleure sur une face du profilé, différente desdites faces opposées.

6) Elément filiforme selon l'une des revendications 3 ou 4, caractérisé en ce que le fil chauffant (1) présente une génératrice qui affleure sur une face du profilé et est disposée en-dessous de l'une des parties femelles (6a) ou (6b).

7) Elément filiforme selon l'une des revendications 3, 4 ou 6, caractérisé en ce que ledit second fil chauffant (8) est placé tangent à la surface intérieure des parties femelles (6a, 6b).

8) Elément filiforme selon l'une quelconque des revendications précédentes, caractérisé en ce qu'il est pouvu de fentes (5) latérales.

9) Insert d'électro-soudage destiné à un manchon de soudage pour l'assemblage de pièces tubulaires en matière thermoplastique, caractérisé en ce qu'il est réalisé par au moins un élément filiforme selon l'une quelconque des revendications 1 à 8.

10) Insert d'électro-soudage selon la revendication 9, caractérisé en ce qu'il est réalisé par l'assemblage d'un élément filiforme selon un enroulement hélicoïdal.

11) Insert d'électro-soudage selon l'une des revendications 9 ou 10, caractérisé en ce que ledit second fil chauffant (8) est placé à distance de la surface opposée à la surface destinée à venir en contact avec les éléments tubulaires à raccorder.

12) Insert d'électro-soudage destiné à un raccord de dérivation avec perforation d'une pièce tubulaire en matière thermoplastique, caractérisé en ce qu'il est réalisé par au moins un élément filiforme selon l'une quelconque des revendications 1 à 8.

13) Insert d'électro-soudage selon la revendication 12, caractérisé en ce qu'il est réalisé par l'assemblage d'un élément filiforme, selon une spirale.

14) Traitement in situ par électro-soudage de canalisations, caractérisé en ce qu'il est réalisé à l'aide d'au moins un élément filiforme selon l'une quelconque des revendications 1 à 8.

15) Traitement par électro-soudage de canalisations selon la revendication 14, caractérisé en ce que l'élément filiforme est directement enroulé et assemblé sur la ou les canalisation(s) et qu'une tension est appliquée au(x) fil(s) chauffant(s) pour réaliser l'électro-soudage.

## FIG.1

## FIG.2

# FIG.3